# EUROPEAN PATENT SPECIFICATION

(11) **EP 0 956 269 B1**
(45) Date of publication and mention of the grant of the patent: **09.10.2002**
(21) Application number: 96926028.0
(22) Date of filing: 04.07.1996
(51) Int. Cl.: C02F 1/40, E03F 5/16, B01D 17/02

(54) **OIL/GREASE SEPARATOR**
ÖL/FETTABSCHEIDER
SEPARATEUR D'HUILE/GRAISSE

(43) Date of publication of application: 17.11.1999
(73) Proprietor: Myrhaug, Terje Johan, 0288 Oslo (NO)
(72) Inventor: Myrhaug, Terje Johan, 0288 Oslo (NO)
(74) Representative: Jones, David Colin
(86) International application number: NO9600163
(87) International publication number: WO98001395

(56) References cited:
- EP-A- 0 048 158
- DE-C- 3 441 528
- DE-C- 4 122 172
- GB-A- 1 563 586
- NO-A- 952 549
- NO-B- 142 988

## Description

The invention concerns a separator which is connected to waste water pipelines in order to separate oils and fat from waste water originating in large-scale catering establishments, kitchens, cafés, restaurants, kiosks, the food industry, slaughterhouses, dairies and from the processing industry, by means of gravitation alone.

It is important to separate oils and fat from waste water originating in the above-mentioned industries in order to ensure that the fat does not create problems during subsequent water treatment, and/or lead to clogging of pipelines, valves, etc.

When waste water from the above-mentioned industries is purified, fat on the surface will prevent the absorption of oxygen and affect the purification process, in addition to which these fatty substances are decomposed into aggressive and foul-smelling fatty acids, thus influencing the working environment in private and public purification plants.

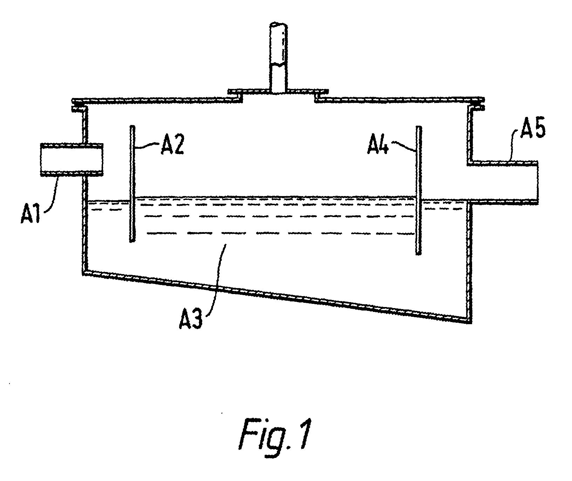

In principle, separators for oils and fat on the market to-day, which work by means of gravitation alone without the use of chemicals, are constructed as illustrated in figure 1, with an inlet, two vertical baffle walls and an outlet.

These act as follows: the waste water enters at inlet A1 and is forced down under the first vertical baffle wall A2. In the separation basin between the baffle walls A2 and A4 the fat is separated and floats up to the top of the water reservoir A3. The water will then be forced out under the vertical baffle wall A4 and passed out at the outlet A5.

There is a wide selection of fat separators on offer on the market in a variety of building materials both as prefabricated and built on-site plants.

It has been shown, however, that most of the separators for oils and fat on the market fall short of requirements.

Some typical problems for the separators on offer on the market to-day are as follows:
1. In order to be able to function as intended, they require the entire separator to be emptied regularly.
   Most separators for vegetable and animal oils and fat are installed in cellars and other unheated rooms as well as being buried in the ground, and failure to empty them will thus result in the fat in the separation basin building up into a heavy oily film which quickly congeals with the result that the fat is passed directly to the outlet together with the waste water.
2. Plants which have drainage of oil or fat with overflow to a fat gutter becomes clogged with congealed fat since the temperature in the separator is too low.
3. Plants with automatic fat removal by means of mechanical scrapers have not only high investment costs, but also substantial costs for operation and maintenance.
4. The volume of to-day's fat separators is unnecessarily large and requires large available spaces when built into cellars and buried in the ground with associated high costs.
5. In plants where the frequency of emptying fat separators for animal and vegetable oils and fat is insufficient, problems arise with regard to clogging and odour.
6. In to-day's separators for animal and vegetable oils and fat the plants have to be coupled to a hot water unit with flush nozzles in order to clean the inside of the tank of congealed fat after emptying. The total discharge volume before and after cleaning is classified as special waste and must be deposited and treated at an approved plant.
7. Costs in connection with emptying tanks by means of suction vehicle are considerable.
8. The warning of a full separator for animal and vegetable oils and fat by means of level sensor in present day plants without heat input comes too late since congealed fat has gradually built up in the separation basin, with the result that the residence time of the waste water in the separator is reduced, thereby giving an unacceptably high fat content in the discharge water from the separator.
   In the worst case the level sensor will fail to give a signal due to congealed fat.

From DE 4122172 A is known a separator for oil and fat from cleaning solutions containing fat, in particular by the cleaning of industrial parts, comprising a first main chamber, with horizontally oblique baffles, wherein the separated oil and fat volume floats and runs out of the upper section of the chamber. A secondary separation chamber provides a controlled long water route. The separator is provided with on overflow for treated water which automatically maintains the water level in the separator. The separator further comprises a built-in immersion heater for keeping the water warm. The separator is also provided with a fat overflow connected to a collecting tank for oil for automatic drainage of the fat to collecting tank.
In accordance with the present invention there is provided a separator which is connectable to pipelines in order to separate oil and fat from process and waste water, comprising a built-in immersion heater for keeping the water in the separator warm, a collecting tank, and a fat overflow for automatic drainage to the collecting tank, characterised in that a hot water supply is connected to the water inlet, a bottom deflector plate is arranged to provide a change of direction of the process and waste water from the submerged inlet, a surge chamber of the separator separates sludge of different densities, whereby sludge of greater density than the waste water is arranged to be automatically flushed from the bottom thereof through a pipe, a sedimentation chamber of the separator is provided with horizontally oblique baffle plates, a level indicator is provided for indicating the level in the collecting tank, and a vertical discharge chamber is provided for passage of the fat-free process and waste water up a submerged pipe having an outlet for the discharge of the fat-free process and waste water, whereby the water level in the separator is automatically maintained.

With the new separator for oil and fat according to the invention a continuous fat separation is obtained with a high degree of separation. This is achieved by the fact that the light oils and fat are rapidly separated from the waste water in a surge chamber and float up to the surface. The heavier oil and fat particles are forced to pass a number of oblique baffle plates together with the waste water which oscillates in step with the oscillations on the water column in the surge chamber which occur when waste water is added to the tank and where the smallest fat particles will become attached to the baffle plates in the sedimentation chamber and build up to larger beads of fat which quickly float to the surface when they become free of the baffle plates.

Thus the heaviest oil and fat particles have a long water route at low speed which helps to provide a high degree of separation and waste water free of fat.

According to the invention sludge with greater density than the added waste water will settle in the separator's sludge trap, i.e. in the bottom zone of the surge chamber of the separator.
Finer sludge particles with a density which is slightly higher than the density of the waste water will settle on the baffle plates and be passed down to the sludge trap. Sludge particles with lower density than the waste water will be drained together with the waste water.

The separator according to the invention may be equipped with a valve for automatic drainage of the sludge trap.

The separator according to the invention is equipped with a fill valve for the automatic addition of supply water in order to compensate for drainage water from the sludge trap.

According to the invention the valves may be controlled automatically for opening and closing by means of a time clock.

A number of tests have been conducted with the new separator for oil and fat with variable loads and amounts of fat. The results of these tests are clear and unambiguous and document in full the above functional description with a continuous high degree of efficiency.

The separator for oil and fat according to the invention, which provides continuous fat separation can thereby be built smaller than to-day's separators and nevertheless achieve a higher and better degree of efficiency.

The congealing with associated clogging of fat in the separator according to the invention can be eliminated by supplying heat to the separator via a thermostatically controlled immersion heater/hot water coil or similar device and thereby ensuring a specific temperature in the separated volume of fat in the separator.

By adding new waste water the height of the liquid in the tank will rise and according to the invention the liquid oil/fat volume can be drained via a fat overflow to a separate collecting tank which is located in such a manner that it receives heat from the separator and thereby keeps the drained oil/fat volume in liquid form.

When the capacity of the collecting tank for the drained oil and fat volume has been reached, according to the invention a light/sound signal may automatically be transmitted to a personnel-serviced area.

According to the invention oils and fat from the separator, free of water, cause very little concern from an environmental point of view since they can be simply and advantageously deposited for recycling, in contrast to to-day's problem of depositing them as special waste.

From the point of view of cost, the separator for oils and fat according to the invention will be more reasonably priced with regard to operation and maintenance than other separators.

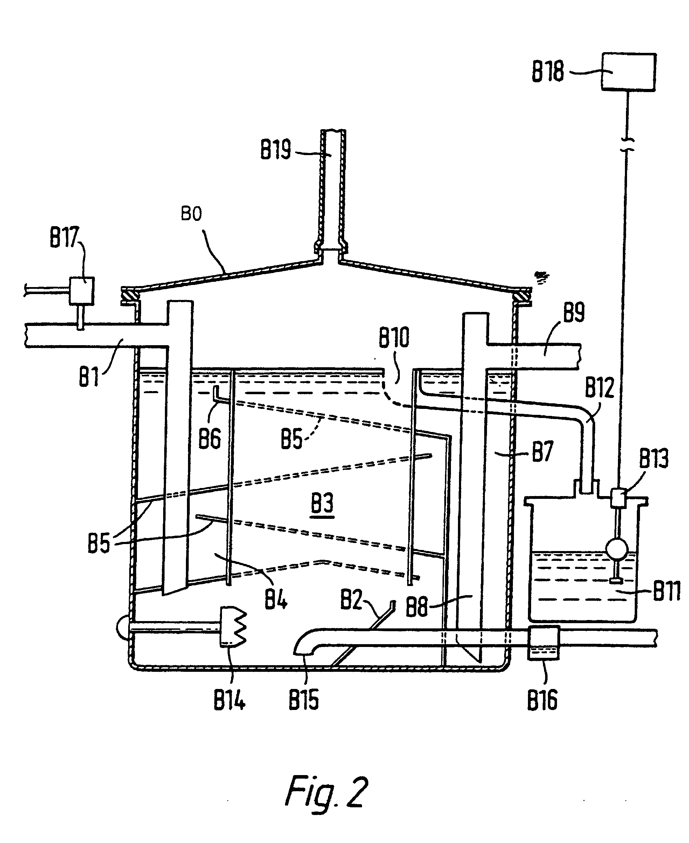

The separator Bo for oil and fat according to the invention is illustrated in figure 2, where the waste water enters the inlet B 1 and is passed down towards the bottom as a submerged inlet and is distributed in the mass of water when it hits the bottom, whereupon it is given a change of direction at bottom deflector plate B2, the aim of which is to flush the waste water up into the surge chamber B3, causing the waste water column to rise a little and to stand still for a moment due to pressure equalization between the surge chamber B3 and the sedimentation chamber B4, with the result that the lightest oil and drops of fat in the waste water column have climbed slightly in the surge chamber B3 and do not follow all the way down when the mass of water moves downward due to the equalization of pressure in the waste water column.

When the waste water column in the surge chamber B3 sinks it is in order to equalize the height difference between the surge chamber B3 and the sedimentation chamber B4 and the waste water with heavier oils and fat particles is then forced to seek the way up into the sedimentation chamber B4 via the baffle plates B5 where, due to reduced flow rate, the smaller and heavier oil and fat particles will rise and be deposited under the baffle plates B5 where they consolidate into larger oil and fat particles which together have substantial buoyancy, become detached and rise up to finally be distributed in the tank volume above the baffle wall B6, downwardly restricted by the upper baffle plate B5.

When waste water is added to the separator for oil and fat according to the invention, the separated oil and fat volume will lie on the top of the mass of water in the sedimentation chamber B4 and the surge chamber B3 while the fat-free waste water is drained by being passed down to the bottom of the vertical discharge chamber B7 and subsequently passed up submerged pipe B8 and discharged from outlet B9.

When waste water is added to the separator according to the invention, oscillations will arise in the surge chamber B3 as previously described with the result that oil and fat which are floating in the surge chamber B3 flow out and over to the sedimentation chamber B4.

The separated oil and fat volume which is lying in the sedimentation chamber B4 will now, according to the invention, be drained via fat overflow B 10 and passed down into the collecting tank B11 via the drainpipe B12.
The collecting tank B11 is equipped with a level indicator B13 and connected to an alarm system B18.

The immersion heater/heating coil B14 ensures that the floating oil and fat volume is kept in liquid form until it is drained by a new supply of waste water.

The sludge which is collected in the bottom of the separator is passed out of the sludge flushing pipe B15 via a time-controlled valve B16. The supply water valve B17 is opened by time delay in order to compensate for the drained waste water with hot water.

The separator for oils and fat according to the invention can be formed in different shapes, e.g. a cube, a cylinder, a pyramid, an obelisk, a cone or a combination of these shapes.

The separator for oils and fat according to the invention can be produced in all materials such as steel, plastic, concrete, aluminium etc., provided they are corrosion-proof against the oil and fatty acids concerned.

## Claims

1. A separator (B0) which is connectable to pipelines in order to separate oil and fat from process and waste water, comprising a built-in immersion heater (B14) for keeping the water in the separator (B0) warm, a collecting tank (B11), and a fat overflow (B10) for automatic drainage to the collecting tank (B11), **characterised in that** a hot water supply (B17) is connected to the water inlet (B1), a bottom deflector plate (B2) is arranged to provide a change of direction of the process and waste water from the submerged inlet (B1), a surge chamber (B3) of the separator (B0) separates sludge of different densities, whereby sludge of greater density than the waste water is arranged to be automatically flushed from the bottom thereof through a pipe (B15), a sedimentation chamber (B4) of the separator (B0) is provided with horizontally oblique baffle plates (B5), a level indicator (B13) is provided for indicating the level in the collecting tank (B11), and a vertical discharge chamber (B7) is provided for passage of the fat-free process and waste water up a submerged pipe (B8) having an outlet (B9) for the discharge of the fat-free process and waste water, whereby the water level in the separator is automatically maintained.

## Revendications

1. Séparateur (B0) pouvant être branché à des canalisations afin de séparer l'huile et la graisse des eaux industrielles et usées, comprenant un élément chauffant à immersion intégré (B14) pour maintenir l'eau chaude dans le séparateur (B0), un réservoir collecteur (B11), et un trop-plein de graisse (B10) pour un drainage automatique au réservoir collecteur (B11), **caractérisé en ce qu'**une alimentation d'eau chaude (B17) est branchée à l'arrivée d'eau (B1), une plaque de déviation inférieure (B2) est placée de manière à réaliser un changement de direction des eaux industrielles et usées à partir de l'arrivée immergée (B1), une chambre d'équilibre (B3) du séparateur (B0) sépare des boues de différentes densités, en conséquence de quoi les boues de densité plus grande que celles des eaux usées sont disposées pour être automatiquement vidangées à partir de son fond par l'intermédiaire d'un tuyau (B15), une chambre de sédimentation (B4) du séparateur (B0) est équipée horizontalement de plaques de déviation obliques (B5), un indicateur de niveau (B13) est prévu pour indiquer le niveau dans le réservoir collecteur (B11), et une chambre de décharge verticale (B7) est prévue pour le passage des eaux industrielles et usées dégraissées jusqu'à une conduite immergée (B8) ayant une évacuation (B9) pour la décharge des eaux industrielles et usées dégraissées, en conséquence de quoi le niveau des eaux dans le séparateur est automatiquement maintenu.

## Patentansprüche

1. Abscheider (B0), welcher mit Rohrleitungen verbindbar ist, um Öl und Fett aus Betriebs- und Abwasser abzuscheiden, aufweisend einen eingebauten Tauchheizer (B14), um das Wasser in dem Abscheider (B0) wann zu halten, einen Sammeltank (B11), und einen Fettüberlauf (B10) zur automatischen Entwässerung zu dem Sammeltank (B11), **dadurch gekennzeichnet, dass** eine Heißwasserzufuhr (B17) mit dem Wassereinlass (B1) verbunden ist, eine Bodenablenkplatte (B2) angeordnet ist, um eine Änderung der Richtung des Betriebs- und Abwassers von dem eingetauchten Einlass (B1) vorzusehen, eine Pufferkammer (B3) des Abscheiders Schlamm unterschiedlicher Dichten abscheidet, wobei Schlamm größerer Dichte als das Betriebswasser ausgerichtet ist, um automatisch von dem Boden davon gespült zu werden durch ein Rohr (B15), eine Abscheidekammer (B4) des Abscheiders (B0) vorgesehen ist mit horizontal schiefen Ablenkplatten (B5), eine Pegelanzeige (B13) vorgesehen ist, zum Anzeigen des Pegels in dem Sammeltank (B11), und eine vertikale Auslasskammer (B7) vorgesehen ist, zum Durchgang des fettfreien Betriebs- und Abwassers hoch zu einem untergetauchten Rohr (B8), welches einen Auslass (B9) aufweist, zum Auslassen des fettfreien Betriebs- und Abwassers, wobei der Wasserpegel in dem Abscheider automatisch beibehalten ist.
